(19) Europäisches Patentamt
European Patent Office
Office européen des brevets

(11)  **EP 1 802 892 B1**

(12)  **FASCICULE DE BREVET EUROPEEN**

(45) Date de publication et mention
de la délivrance du brevet:
**19.06.2019  Bulletin 2019/25**

(51) Int Cl.:
***F16F 15/123*** *(2006.01)*

(21) Numéro de dépôt: **05798966.7**

(22) Date de dépôt: **08.09.2005**

(86) Numéro de dépôt international:
**PCT/FR2005/050721**

(87) Numéro de publication internationale:
**WO 2006/035173 (06.04.2006 Gazette 2006/14)**

(54) **SIEGE A PIVOT DEPORTE ET AMORTISSEUR DE TORSION L'INCLUANT**

SITZ MIT  VERSETZTEM DREHZAPFEN UND DIESEN UMFASSENDER TORSIONSDÄMPFER

SEAT WITH OFFSET PIVOT AND TORSIONAL DAMPER INCLUDING THE SAME

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité:  **30.09.2004  FR 0452216**

(43) Date de publication de la demande:
**04.07.2007  Bulletin 2007/27**

(73) Titulaire: **Valeo Embrayages
80009 Amiens Cedex 2 (FR)**

(72) Inventeurs:
• **DESPRES, Dominique
F-80000 AMIENS (FR)**
• **LAURENT, Eric
F-80110 DEMUIN (FR)**
• **DUSSEAUX, Fabrice
F-80090 AMEINS (FR)**

(74) Mandataire: **Cardon, Nicolas et al
Valeo Embrayages
Sce Propriété Intellectuelle
Le Delta
14, avenue des Béguines
95892 Cergy Pontoise Cedex (FR)**

(56) Documents cités:
**DE-A1- 19 841 916     US-A- 5 803 442
US-B1- 6 332 843**

EP 1 802 892 B1

**Description**

L'invention concerne des sièges pour ressorts intégrés en particulier dans des amortisseurs de torsion d'une ligne de transmission d'un véhicule automobile. L'invention concerne aussi des dispositifs d'amortissement de torsion comportant de tels sièges.

Dans le document FR 2 732 426 A1, il est décrit un dispositif d'amortissement de torsion intégré à une friction d'embrayage. Ce dispositif comporte un ensemble de ressorts dont les extrémités coopèrent avec le reste du dispositif à travers des sièges métalliques. Plus précisément, le dispositif d'amortissement de torsion comporte deux parties coaxiales montées rotatives l'une par rapport à l'autre à l'encontre des ressorts précédemment cités qui interviennent de manière circonférentielle, les sièges métalliques intervenant entre, d'une part, l'une au moins des extrémités de ressort et, d'autre part, l'une et/ou l'autre des parties coaxiales. Pour cela, chaque siège métallique comprend une partie frontale assurant l'appui et/ou le centrage de l'extrémité du ressort ou de l'ensemble de ressort avec le(s)quel(s) il coopère, et une partie dorsale adossée à la partie frontale présentant un tronçon de barreau s'étendant en saillie réalisant une liaison pivot avec l'une et/ou l'autre des parties coaxiales. L'axe du tronçon de barreau, qui est aussi l'axe de la liaison pivot, est situé sensiblement dans le plan de la partie dorsale du siège.

Or, en fonctionnement, du fait des forces centrifuges qui s'appliquent, il y a une éjection des sièges qui peut survenir. Cette éjection des sièges se traduit par une sortie radialement vers l'extérieur du tronçon de barreau de son logement dans les parties coaxiales, la fonction de liaison pivot n'étant alors plus assurée. Cette éjection provoque une usure des contacts entre chaque siège et l'un et/ou l'autre des parties coaxiales. De plus, cette éjection des sièges entraîne un frottement plus important des ressorts sur une partie externe radialement des logements des parties coaxiales les recevant.

Un dispositif d'amortissement de torsion selon le préambule de la revendication 1 est connu des documents US 5803442, DE 19841916 A1 et US 6332843.

Un but de l'invention est de fournir des sièges ne pouvant pas être éjectés lors du fonctionnement du dispositif d'amortissement de torsion les comprenant.

A cet effet, la présente invention propose un dispositif d'amortissement de torsion selon la revendication 1.

Ainsi, l'axe du mouvement de pivotement du siège est éloigné de la face dorsale et, par conséquent, de la face frontale du siège. Ceci empêche la désolidarisation de la liaison pivot et donc l'éjection complète du siège (en particulier du tronçon de barreau) de son logement.

Avantageusement mais facultativement, le siège présente au moins l'une des caractéristiques suivantes :

- le tronçon de barreau comporte une surface arrondie formant un sommet du tronçon de barreau.
- le tronçon de barreau comporte au moins deux cotés sensiblement plans.
- les cotés sont les cotés d'une forme prismatique formant le tronçon de barreau, s'éloignant l'un de l'autre en direction de la face dorsale.
- le tronçon de barreau comporte un congé avec la partie dorsale du siège.
- Le siège comporte au moins un gradin s'étendant en saillie de la face frontale, apte à coopérer avec l'extrémité de ressorts.

D'autres caractéristiques et avantages de l'invention apparaîtront lors de la description ci-après d'un mode préféré de réalisation ainsi que des variantes. Aux dessins annexés :

- la figure 1 est une vue de face d'un dispositif d'amortissement de torsion selon l'invention,
- la figure 2 est une vue en coupe selon II-II du dispositif de la figure 1,
- la figure 3 est une vue schématique partielle de sièges selon l'invention installés dans un dispositif d'amortissement de torsion en état de repos,
- la figure 4 est vue de détail d'un siège de la figure 3.
- la figure 5 est une vue schématique similaire à la figure 3, le dispositif étant en état de débattement maximal, et,
- la figure 6 est une vue schématique similaire aux figures 3 et 5, le dispositif subissant des forces centrifuges.

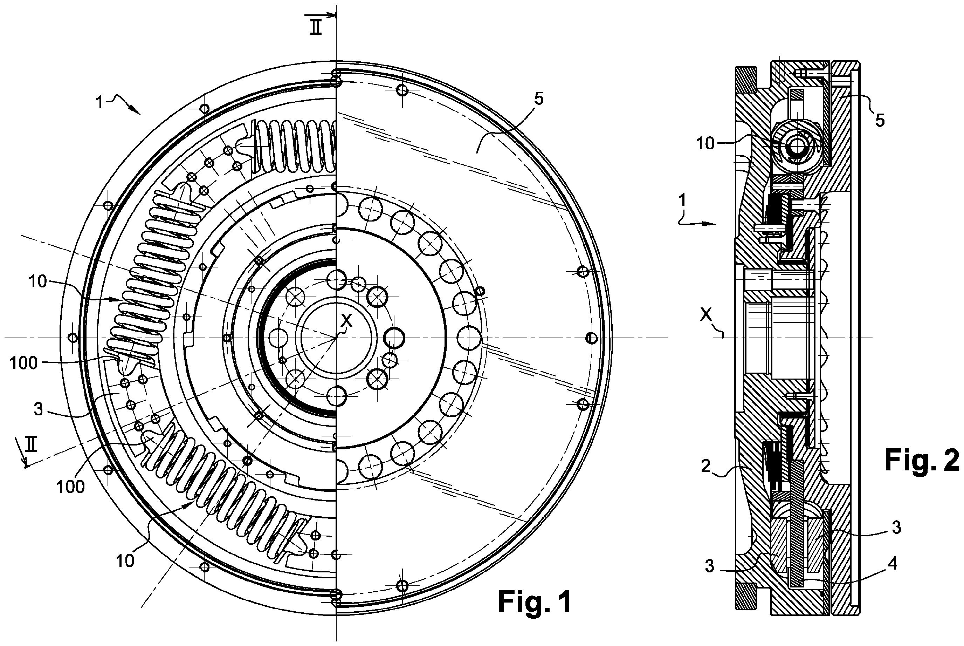

En référence aux figures 1 et 2, un dispositif d'amortissement de torsion 1 se présente, ici à des fins illustratives, sous la forme d'un double volant amortisseur. Le double volant amortisseur 1 comporte un premier volant 2, ou volant primaire, servant d'élément d'entrée au dispositif, ainsi qu'un deuxième volant 5, ou volant secondaire, servant d'élément de sortie du dispositif. Les deux volants 2 et 5 sont montés coaxiaux l'un par rapport à l'autre autour d'un axe de rotation X du double volant amortisseur. Les deux volants 2 et 5 sont de plus montés rotatifs l'un par rapport à l'autre à l'encontre de moyens amortisseurs comportant, ici, des ressorts 10 ainsi que des moyens d'interfaçage 100,3,4 avec les deux volants. Plus précisément, dans le mode de réalisation illustré, les moyens d'interfaçage comprennent des sièges de ressorts 100 placés aux extrémités des ressorts, d'une part, et, d'autre part, des éléments de guidage 3 encadrant un voile 4. Les éléments de guidage 3, ici se présentant sous la forme de plots, sont fixés sur le volant primaire 3, alors que le voile 4 est lié au volant secondaire 5. Chaque siège 100 est apte à coopérer avec les éléments de guidage 3 et/ou le voile 4 selon une liaison pivot.

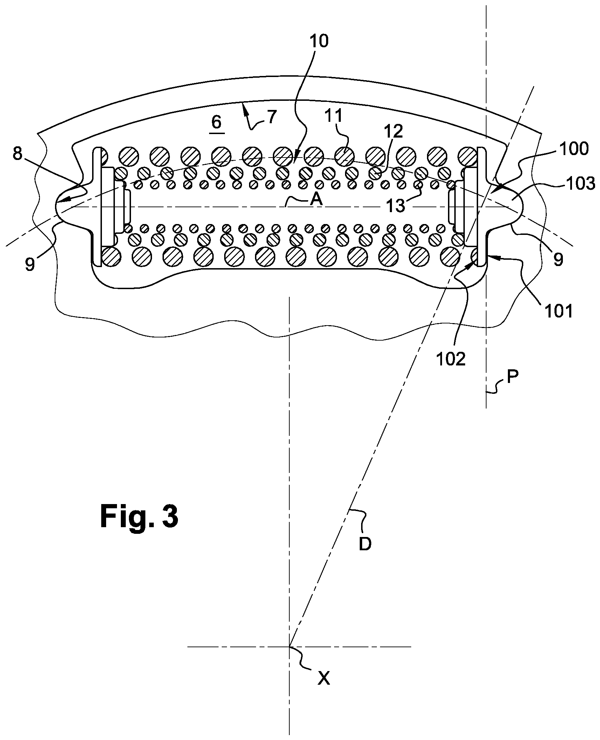

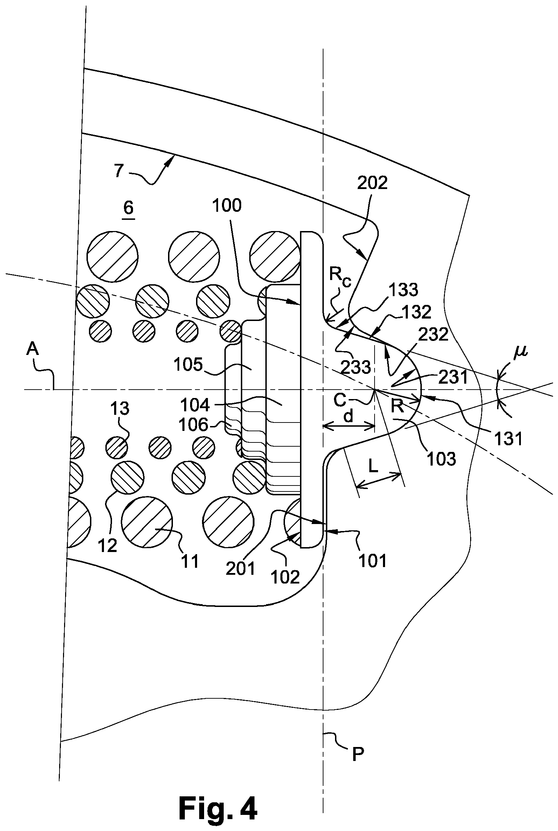

Nous allons maintenant décrire plus en détail l'agencement des moyens d'interfaçage précités, dont le siège de ressort 100, selon un mode préféré de réalisation de l'invention, en référence aux figures 3 et 4.

Le siège 100 comporte un disque circulaire, de faible épaisseur par rapport à un diamètre, comprenant deux faces : une face frontale 102, face apte à coopérer, ici, avec une extrémité des ressorts 10, et une face dorsale 101 adossée à la face frontale 102 de l'autre coté du disque circulaire. La face dorsale 101 définie un plan P, appelé plan du siège 100, sensiblement perpendiculaire à un axe A du disque circulaire. S'étendant en saillie de la face dorsale 101, le siège 100 comporte un tronçon de barreau 103 s'étendant sensiblement parallèlement le long d'un diamètre du disque circulaire du siège 100.

De manière générale, le tronçon de barreau 103 est de forme prismatique dont la base repose sur la face dorsale 101, sensiblement dans le plan P, et dont le sommet est arrondi. Le sommet comporte une surface 131 de section sensiblement circulaire de centre C et de rayon R. Le centre C est situé à une distance d du plan P. Selon l'invention, la distance d présente une valeur sensiblement non égale à zéro. Ensuite, les deux cotés 132 de la forme prismatique comprennent chacun une surface quasi plane présentant, en section, une largeur L. les deux cotés 132 de la forme prismatique ne sont pas parallèles entre eux, ils s'éloignent l'un de l'autre dans la direction de la base de la forme prismatique afin de former un angle μ. Enfin le raccordement entre chacun des cotés 132 et la face dorsale 101 est réalisé par un congé 133 présentant un rayon Rc.

Comme cela est illustré aux figures 3 et 4, la face dorsale 101 et le tronçon de barreau 103 sont aptes à être reçus dans un logement 9 prévu à cet effet dans les moyens de guidages 3 et le voile 4 du dispositif d'amortissement de torsion. Il est à noter que seule une silhouette de ce logement est illustrée aux figures précitées. Sur cet exemple, le logement 9 du voile 4 a un contour fermé tandis que les logements 9 des moyens de guidage 3 ont un contour ouvert dans leur partie radiale extérieure. De manière générale, le logement 9 est sensiblement complémentaire avec la partie du siège décrite ci-dessus avec laquelle il est amené à coopérer. Pour cela, le logement 9 comporte un évidement 8 dont un fond concave comporte une surface 231 de section sensiblement circulaire puis de deux parois latérales quasi planes 232 sensiblement non parallèles entre elles. Ainsi l'évidement 8 présente une forme prismatique sensiblement complémentaire de la forme prismatique du tronçon de barreau 103 précédemment décrite et apte à être reçu dans ledit évidement 8. Ainsi, le logement 9 et le siège 100 peuvent former une liaison pivot selon l'invention, dont le fonctionnement va être décrit un peu plus loin.

De part et d'autre de l'évidement 8, le logement 9 présente un premier bord 201 et un deuxième bord 202, tous deux sensiblement plans et tous deux reliés à la paroi 132 respective de l'évidement 8 par un congé arrondi 233. Ces deux bords 201 et 202 jouent un rôle de butée vis-à-vis du siège 100 lors de la mise en oeuvre de la liaison pivot. En effet, la face dorsale 101 est apte, lors de cette mise en oeuvre, à venir en appui soit sur le premier bord 201, soit sur le deuxième bord 202. Les deux bords 201 et 202 ne sont pas parallèles l'un par rapport à l'autre. Dans le cas présent, le bord 202 est orienté sensiblement selon un diamètre D du dispositif d'amortissement de torsion. Alors que le bord 201 est orienté sensiblement selon une perpendiculaire à une corde matérialisée par l'axe A du ressort 10 lorsque le dispositif d'amortissement de torsion est au repos ou qu'il n'y a pas de débattement entre les moyens de guidage 3 et le voile 4, ni de force centrifuge s'exerçant sur les ressorts 10, les déformant. Une telle situation est visible sur la figure 3.

Comme nous l'avons mentionné précédemment, le siège de ressorts 100 est destiné à être positionné à une extrémité des ressorts 10, cette extrémité venant alors en appui sur la face frontale 102 du siège 100. Pour assurer un bon positionnement relatif de l'extrémité des ressorts 10 sur le siège 100, la face frontale 102 de ce dernier comporte, ici, des gradins 104, 105, 106 s'étendant en saillie de ladite face frontale 102. Une valeur d'un diamètre externe des gradins est sensiblement égale à une valeur d'un diamètre interne des ressorts qu'ils positionnent. Dans le cas illustré aux figures, les ressorts 10 sont au nombre de trois, positionnés de manière coaxiale les uns par rapport aux autres et, par conséquent, les gradins sont aussi au nombre de trois. Le premier gradin 104 permet de positionner le ressort 11. Ce gradin 104 présente donc une valeur de diamètre externe sensiblement égale à une valeur de diamètre interne du ressort 11. L'extrémité de ce dernier vient directement en appui sur la face frontale 102 du siège 100.

Le deuxième gradin 105 permet de positionner le ressort 12. Ce gradin 105 présente donc une valeur de diamètre externe sensiblement égale à une valeur de diamètre interne du ressort 12. Le gradin 105 s'étend en saillie d'une face quasi plane sensiblement parallèle à la face frontale 102, face formant le sommet du gradin 104. L'extrémité du ressort 12 vient en appui sur cette face.

Il en va de manière similaire pour le troisième gradin 106 positionnant, quant à lui, le ressort 13. le gradin 106 s'étend en saillie d'une face quasi plane sensiblement parallèle à la face frontale 102, face formant le sommet du gradin 105. L'extrémité du ressort 13 vient en appui sur cette face.

Nous allons maintenant décrire le fonctionnement du mode préféré de l'invention en référence aux figures 3, 5 et 6.

Comme nous l'avons vu précédemment, la figure 3 illustre l'état du dispositif d'amortissement de torsion selon l'invention au repos ou l'état de ce même dispositif sans débattement angulaire entre les moyens de guidage 3 et le voile 4, ni force centrifuge s'exerçant sur les ressorts.

Le dispositif d'amortissement de torsion comporte une fenêtre 6 qui présente un bord externe 7 de forme sensiblement circulaire dont le centre est quasi confondu avec l'axe X dudit dispositif d'amortissement de torsion, ainsi que de deux logements 9 en regard l'un de l'autre formant chacun un coté radiale de la fenêtre 6. La fenêtre 6 présente une symétrie en miroir par rapport à un axe médian matérialisé par l'axe vertical passant par X sur la figure 3.

Dans cette fenêtre 6, est positionné un ensemble comportant les ressorts 10 aux extrémités desquelles est monté un siège 100 respectif, la face frontale 102 de chaque siège 100 étant en regard l'une de l'autre, le tronçon de barreau 103 de chaque siège 100 de l'ensemble ainsi constitué étant dans l'évidement 8 respectif de la fenêtre 6. Il est à noter que dans cette position, la face dorsale 101 de chacun des sièges 100 est en appui de butée avec le bord 201 associé du logement 9 respectif.

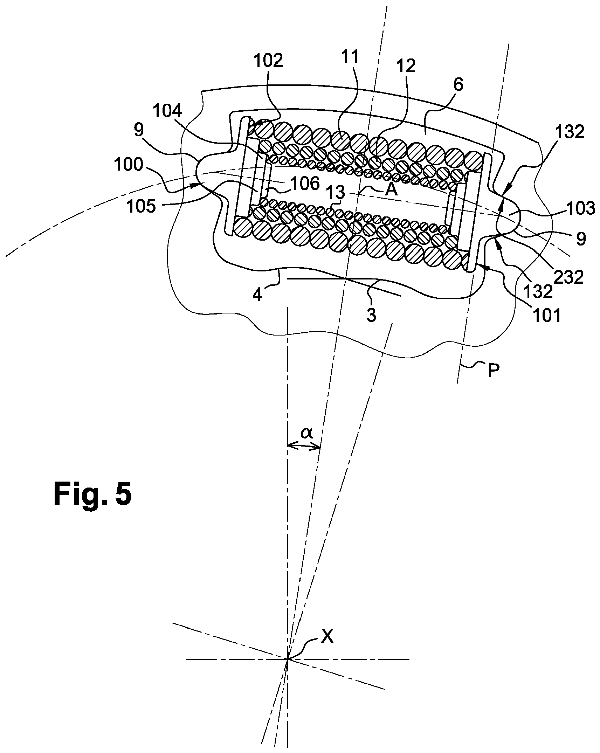

En figure 5, est illustré un état du dispositif d'amortissement de torsion dans lequel le débattement angulaire 2.$\alpha$ entre les moyens de guidage 3 et le voile 4 est maximal. En effet, les ressorts 10, qui sont ici des ressorts de compression, ont leurs spires qui sont devenues jointives (au moins l'un des ressorts). Il est à noter que les sièges 100 sont bien positionnés dans leur logement 9 respectif. Par rapport à l'état du dispositif d'amortissement de torsion de la figure 3, chaque siège 100 a effectué un pivotement qui a rompu l'appui de la face dorsale 101 sur le bord 201 du logement 9 : le pivotement dû à la liaison pivot entre le tronçon de barreau 102 et le logement 9 s'est effectué autour d'un axe sensiblement parallèle au tronçon de barreau 103 et passant sensiblement par le point C et ce, jusqu'à ce que le coté 132 du tronçon de barreau 103 vienne en contact avec la paroi 232 de l'évidement 8 du logement 9.

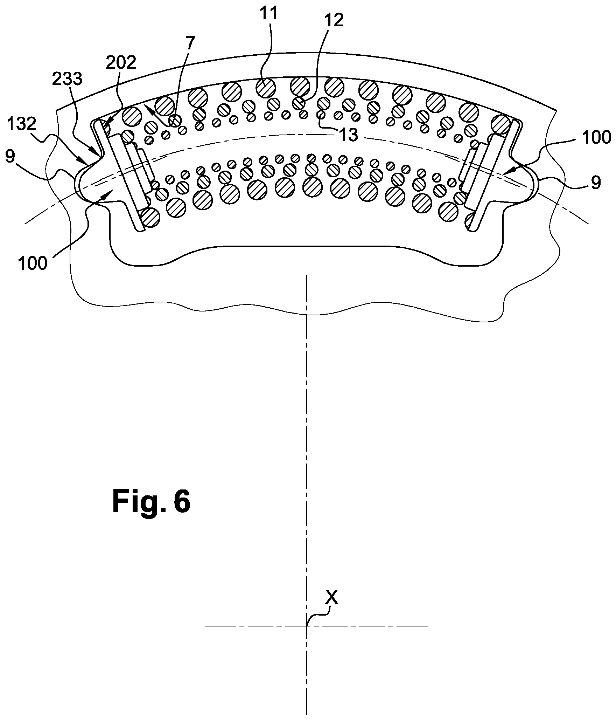

A la figure 6, le pivotement des sièges 100 dans leur logement 9 respectif se poursuit, les sièges étant entraînés dans ce pivotement par la déformation des ressorts 10 auxquels ils sont reliés sous l'effet des forces centrifuges. Si le débattement entre les moyens de guidage 3 et le voile 4 diminue et devient quasiment nul (comme l'illustre la figure 6), les ressorts 10 déformés viennent épouser le bord externe 7 de la fenêtre 6, les spires venant en appui sur le bord externe 7. Dans ce pivotement, le coté 132 du tronçon de barreau 103 de chaque siège 100 se met à rouler sur une partie du congé 233 du logement 9 associé jusqu'à ce que la face dorsale 101 vienne en appui sur le bord formant butée 202 dudit logement 9 associé, le tronçon de barreau restant ainsi logé dans son évidement 8 associé. Ainsi le siège 100 n'est pas éjecté de son logement 9.

Il est à noter que, lors d'essais de configurations présentant des valeurs différentes des paramètres d, L, R ,Rc et a, les conditions optimum de fonctionnement étaient obtenues lorsque les valeurs des paramètres vérifiaient sensiblement l'équation :

$$L = R.\tan(\alpha) + \frac{1}{\cos(\alpha)}.d + \frac{\sin(\alpha)-1}{\cos(\alpha)}.Rc$$

Bien entendu, on pourra apporter à l'invention de nombreuses modifications sans pour autant sortir du cadre de celle-ci. Par exemple, bien qu'illustré par un double volant amortisseur, le dispositif d'amortissement de torsion selon l'invention peut être, une friction d'embrayage, un amortisseur de torsion seul, un amortisseur de torsion intégré au sein d'un convertisseur de couple pour une boite de vitesse automatique. Le dispositif d'amortissement de torsion peut être utilisé aussi en relation avec un double embrayage, une boite de vitesse robotisée, un volant flexible seul ou primaire de double volant amortisseur.

Dans une variante de réalisation de l'invention, le siège 100 des ressorts peut être obtenu par usinage, forgeage, matriçage, par moulage d'un métal ou d'une matière synthétique, par la technologie des poudres compressées.

## Revendications

1. Dispositif d'amortissement de torsion, notamment pour un véhicule automobile, comportant deux parties coaxiales (2, 5) montées rotative l'une par rapport à l'autre à l'encontre de moyens amortisseurs (10, 11, 12, 13, 3, 4, 100) comprenant des ressorts (10, 11, 12, 13) et des moyens d'interfaçage (3, 4, 100) des ressorts avec les parties coaxiales, les moyens d'interfaçage comportant au moins :

   - un siège (100) destiné à être placé sur une extrémité de ressorts (10, 11, 12, 13), comportant :

      - une face frontale (102) apte à coopérer avec l'extrémité des ressorts ;
      - une face dorsale (101) définissant un plan P adossé à la partie frontale ; et,
      - un tronçon de barreau (103) s'étendant en saillie de la face dorsale et présentant sur une surface (131) une section sensiblement circulaire de centre (C), tronçon de barreau apte à être un élément d'une liaison pivot,
      - un axe du tronçon de barreau passant par le centre (C) du tronçon de barreau s'étend à une distance (d) prédéterminée non sensiblement égale à zéro du plan P.

   - des moyens de guidage (3) liés à l'une des parties coaxiales et un voile (4) lié à l'autre des parties coaxiales, le siège étant apte à coopérer avec les éléments de guidage et le voile selon une liaison pivot , les éléments de guidage et le voile comportant au moins un logement (9) présentant un évidement (8) sensiblement complémentaire du tronçon de barreau du siège pour réaliser la liaison pivot,

   **caractérisé en ce que** ledit logement présente un premier bord (201) et un deuxième bord (202) aptes à venir en contact de butée avec la face dorsale du siège lors d'une mise en oeuvre de la liaison pivot, les deux bords (201, 202) n'étant pas parallèles l'un par rapport à l'autre.

2. Dispositif d'amortissement de torsion, selon la revendication 1 **caractérisé en ce que** le tronçon de barreau du siège (100) comporte une surface arrondie (131) formant un sommet du tronçon de barreau.

3. Dispositif d'amortissement de torsion, selon la revendication 1 ou 2, **caractérisé en ce que** le tronçon de barreau du siège (100) comporte au moins deux cotés (132) sensiblement plans.

4. Dispositif d'amortissement de torsion, selon la revendication 3, **caractérisé en ce que**, les cotés sont les cotés d'une forme prismatique formant le tronçon de barreau, s'éloignant l'un de l'autre en direction de la face dorsale.

5. Dispositif d'amortissement de torsion, selon l'une des revendications 1 à 4, **caractérisé en ce que** le tronçon de barreau comporte un congé (133) avec la partie dorsale du siège.

6. Dispositif d'amortissement de torsion, selon l'une des revendications 1 à 5, **caractérisé en ce qu'**il comporte au moins un gradin (104, 105, 106) s'étendant en saillie de la face frontale, apte à coopérer avec l'extrémité de ressorts.

**Patentansprüche**

1. Torsionsdämpfende Vorrichtung, insbesondere für ein Kraftfahrzeug, die zwei koaxiale Teile (2, 5) umfasst, die zueinander gegen Dämpfmittel (10, 11, 12, 13, 3, 4, 100) drehend montiert sind, die Federn (10, 11, 12, 13) und Schnittstellenbildungsmittel (3, 4, 100) der Federn mit den koaxialen Teilen umfassen, wobei die Schnittstellenbildungsmittel mindestens Folgendes umfassen:

- einen Sitz (100), der dazu bestimmt ist, auf einem Ende von Federn (10, 11, 12, 13) platziert zu sein, umfassend:
- eine frontale Seite (102), die geeignet ist, um mit dem Ende der Federn zusammenzuwirken;
- eine Rückenseite (101), die eine Ebene P, die an dem frontalen Teil anliegt, definiert, und
- einen Stangenabschnitt (103), der sich von der Rückenseite vorstehend erstreckt und eine Oberfläche (131) mit einem im Wesentlichen kreisförmigen Mittenquerschnitt (C) aufweist, wobei der Stangenabschnitt geeignet ist, ein Element einer Schwenkverbindung zu sein,

- eine Achse des Stangenabschnitts, die durch die Mitte (C) des Stangenabschnitts verläuft, sich in einer vorbestimmten Entfernung (d) im Wesentlichen nicht gleich null von der Ebene P erstreckt,
- Führungsmittel (3), die mit einem der koaxialen Teile verbunden sind, und eine Schale (4), die mit dem anderen der koaxialen Teile verbunden ist, wobei der Sitz geeignet ist, um mit den Führungselementen und der Schale gemäß einer Schwenkverbindung zusammenzuwirken, wobei die Führungselemente und die Schale mindestens eine Aufnahme (9) umfassen, die eine Aussparung (8) aufweist, die im Wesentlichen zu dem Stangenabschnitt des Sitzes komplementär ist, um die Schwenkverbindung herzustellen,

**dadurch gekennzeichnet, dass** die Aufnahme einen ersten Rand (201) und einen zweiten Rand (202) aufweist, die geeignet sind, um mit der Rückenseite des Sitzes bei einer Umsetzung der Schwenkverbindung in Anschlagberührung zu kommen, wobei die zwei Ränder (201, 202) nicht parallel zueinander sind.

2. Torsionsdämpfende Vorrichtung nach Anspruch 1, **dadurch gekennzeichnet, dass** der Stangenabschnitt des Sitzes (100) eine gerundete Oberfläche (131) umfasst, die einen Gipfel des Stangenabschnitts bildet.

3. Torsionsdämpfende Vorrichtung nach Anspruch 1 oder 2, **dadurch gekennzeichnet, dass** der Stangenabschnitt des Sitzes (100) mindestens zwei im Wesentlichen flache zwei Seiten (132) umfasst.

4. Torsionsdämpfende Vorrichtung nach Anspruch 3, **dadurch gekennzeichnet, dass** die Seiten die Seiten einer Prismenform sind, die den Stangenabschnitt bilden, indem sie sich voneinander in Richtung der Rückenseite entfernen.

5. Torsionsdämpfende Vorrichtung nach einem der Ansprüche 1 bis 4, **dadurch gekennzeichnet, dass** der Stangenabschnitt eine Kehle (133) mit dem Rückenteil des Sitzes umfasst.

6. Torsionsdämpfende Vorrichtung nach einem der Ansprüche 1 bis 5, **dadurch gekennzeichnet, dass** sie mindestens eine Stufe (104, 105, 106) umfasst, die sich von der frontalen Seite vorstehend erstreckt, die geeignet ist, um mit dem Ende von Federn zusammenzuwirken.

## Claims

1. Torsion damping device, in particular for a motor vehicle, comprising two coaxial parts (2, 5) mounted so as to rotate with respect to each other counter to damping means (10, 11, 12, 13, 3, 4, 100) comprising springs (10, 11, 12, 13) and means (3, 4, 100) of interfacing the springs with the coaxial parts, the interfacing means comprising at least:

   - one seat (100) intended to be placed on one end of the springs (10, 11, 12, 13), comprising:

     - a front face (102) able to cooperate with the ends of the springs;
     - a rear face (101) defining a plane P behind the front part; and
     - a bar section (103) extending projecting from the rear face and having on one surface (131) a substantially circular section of centre (C), a bar section able to be one element of a pivot connection,
     - an axis of the bar section passing through the centre (C) of the bar section extends at a predetermined distance (d) from the plane P not substantially equal to zero,

     - guidance means (3) connected to one of the coaxial parts and a plate (4) connected to the other one of the coaxial parts, the seat is able to cooperate with the guidance elements and the plate on a pivot connection, the guidance elements and the plate comprise at least one housing (9) having a recess (8) substantially complementary to the bar section of the seat in order to effect the pivot connection,

   **characterised in that** the housing has a first edge (201) and a second edge (202) able to come into abutment contact with the rear face of the seat when the pivot connection is used, the two edges (201, 202) not being parallel to each other.

2. Torsion damping device according to claim 1, **characterised in that** the bar section of the seat (100) has a rounded surface (131) forming a top of the bar section.

3. Torsion damping device according to claim 1 or 2, **characterised in that** the bar section of the seat (100) comprises at least two substantially flat sides (132).

4. Torsion damping device according to claim 3, **characterised in that** the sides are sides with a prismatic shape forming the bar section, moving away from each other in the direction of the rear face.

5. Torsion damping device according to one of claims 1 to 4, **characterised in that** the bar section comprises a fillet (133) with the rear part of the seat.

6. Torsion damping device according to one of claims 1 to 5, **characterised in that** it comprises at least one slope (104, 105, 106) extending projecting from the front face, able to cooperate with the ends of the springs.

Fig. 2

Fig. 1

**Fig. 3**

**Fig. 4**

**Fig. 5**

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2732426 A1
- US 5803442 A
- DE 19841916 A1
- US 6332843 B